# EUROPEAN PATENT APPLICATION

(11) **EP 4 436 092 A1**
(43) Date of publication of application: **25.09.2024**
(21) Application number: 23020145.1
(22) Date of filing: 21.03.2023
(51) Int. Cl.: H04L 9/00, H04L 9/08

(54) **PROTECTION OF A KEY ENCAPSULATION MECHANISM, KEM, AGAINST FAULT INJECTION ATTACKS**

(71) Applicant: Giesecke+Devrient Mobile Security Germany GmbH, 81677 München (DE)
(72) Inventor: Guillen Hernandez, Oscar, 81677 München (DE)
(74) Representative: Giesecke+Devrient IP

(57) **Abstract**

A first processing entity, comprising an implementation covering at least a Key Decapsulation Phase of a Key Encapsulation Mechanism, KEM, constructed to share a key to be shared between a second processing entity and said first processing entity, wherein the first processing entity, when executing the implementation of the Key Decapsulation Phase, executes a decapsulation method, the decapsulation method is characterized in that the decapsulation method comprises: a decapsulation count mechanism coupled to or integrated into the Key Decapsulation Phase of the KEM, comprising steps to: (i) detect and count and store in the processing entity decapsulation errors occurring when the Key Decapsulation Phase is executed, and (ii) when the count of decapsulation errors reaches or exceeds a predefined count limit, initiate an error measure.

## Description

### Field of the invention

The present invention relates to protection of a Key Encapsulation Mechanism, KEM, constructed to share a key between a first and a second processing entity, against fault injection attacks, particularly when the KEM is based on a lattice-based post-quantum cryptography scheme, particularly Kyber or NewHope or Saber.

### Background of the invention and prior art

Key Encapsulation Mechanisms, KEM, are fundamental cryptographic primitives for Key Exchange in Post Quantum Cryptography. A KEM is constructed to share a key between first and a second processing entity, for later key protected exchange of messages between the two entities, herein making use of the shared key for security operation. Security operations in such message exchange can imply: message encryption, with the shared key or with a key derived from said shared key, by a sender of a message; or message decryption, with the shared key or with a key derived from said shared key, by a receiver of a message; or authentication with the shared key or with a key derived from said shared key, by either of the two entities, i.e. the sender or the receiver of a message. The usage of a shared key is not further addressed in this document, however the aim of this document is the Key Encapsulation Mechanisms, KEM, used for key exchange.

An entire Key Encapsulation Mechanisms, KEM, includes three phases, namely Key Generation Phase, Key Encapsulation Phase, and Key Decapsulation Phase.

In the Key Generation Phase, a key or key pair for encrypting, or encapsulating, a to be shared key is generated by a key generation mechanism, which can be essentially any know suitable key generation mechanism.

In the Key Encapsulation Phase, the to be shared key is encrypted with a key generated in the Key Generation by an encryption mechanism. The encryption mechanism essentially be as any known encryption mechanism.

In the Key Decapsulation Phase, the key that was before encrypted in the Key Encapsulation Phase is decrypted, so as to restore the key to be shared.

Typically, a Key Encapsulation Mechanism, KEM, is based on asymmetric cryptography. Herein, in the Key Generation Phase, a first processing entity generates a public/private key pair, and sends the public key to a second processing entity with which a key shall be shared. At the second processing entity, the to be shared key is encrypted with the public key of the first processing entity in the Encapsulation Phase, and sent to the first processing entity. At the first processing entity, the encrypted to be shared key is received and decrypted with its own private key in the Decapsulation Phase.

Processing entities including implementations of cryptographic algorithms are targets of side channel attacks, particularly fault attacks, such as Differential Fault Analysis attacks, DFA attacks, and Fault Injection attacks, FI attacks, Chosen Ciphertext Attacks, CCA, as well as combinations of these, all aiming at retrieving secret information from the processing entities during processing the secret information.

A known countermeasure against fault attacks directed against an implementation of a cryptographic algorithm is to implement a fault detection counter which assures that the implementation of the cryptographic algorithm is finished correctly, and for example no program jumps induced by an attack occur. In case the fault detection counter detects that the implementation of the cryptographic algorithm is not finished correctly, but for example some instructions of the implementation of the cryptographic algorithm are skipped, the fault detection counter initiates an error message, for example preventing outputting of the output result of the cryptographic algorithm.

It can happen that fault detection counters are erroneously activated by reasons which are no attacks. For example a memory malfunction can lead to a program jump similar to one generated by an attack, and thus to activation of a fault detection counter. In some situations fault detection counters are temporarily disabled to prevent faulty activation of the fault detection counter. This leads to security risks.

A Chosen Ciphertext Attack, CCA, is an attack on a cryptographic algorithm where information about a secret key used in the algorithm can be gathered by analyzing the decryption of specially crafted ciphertexts.

Most KEMs employ the Fujisaki-Okamoto transform, FO transform, or variations of it, to achieve security against Chosen Ciphertext Attacks, CCAs, especially when otherwise weakly-secured cryptographic primitives are used.

The FO transform performs a re-encryption of the decrypted ciphertext and compares it to the ciphertext received. If both ciphertexts match, the plaintext (decrypted ciphertext) can be used as no modification was detected. Otherwise, the plaintext (decrypted ciphertext) is discarded, and an error measure is taken, for example randomness is sent back instead of outputting the plaintext (decrypted ciphertext) from the KEM. In a KEM, the plaintext (decrypted ciphertext) is the to be shared key.

The FO transform acts not only as a protection against CCA but also as a first line protection against fault attacks such as Differential Fault Attacks.

The effect, in a Key Encapsulation Mechanism, KEM, that a received ciphertext containing an encrypted to be shared key differs from the re-encrypted decrypted ciphertext generated by the FO transform, is called a decapsulation error.

Decapsulation errors can particularly occur in a Key Encapsulation Mechanism, KEM, that is based on asymmetric cryptography, also for reasons which are not an attack. For example, in case that by mistake a wrong public key is used for encryption of the to be shared key during the Encapsulation Phase, decryption with the correct private key and re-encryption with the correct public key in the Decapsulation Phase generates a decapsulation error.

Therefore, immediate blocking or disabling of a processing entity implementing a Key Encapsulation Mechanism, KEM, whenever a decapsulation error occurs would imply a considerable number of erroneous blockings or disablings, and thus could impair reasonable operability of the processing entity to an undue extent.

The trivial point of attack is the comparison function of the FO transform wherein the two ciphertexts are compared. Bypassing the comparison with the use of a targeted fault, an attacker could retrieve the faultily decrypted ciphertext and apply a Chosen Ciphertext Attack, CCA attack.

Fault-Assisted Chosen Ciphertext Attacks, also known as Fault-enabled Chosen Ciphertext Attacks, are a novel type of attacks which make use of Fault Injection techniques to cause the FO comparison to succeed by modifying computations within the FO transform with the help of a fault, e.g., within the re-encryption steps.

For Fault-Assisted CCA attacks to work, the faults must be successfully repeated multiple times (in the order of thousands), such that multiple faultily decrypted ciphertexts can be extracted, every time making the processing entity computing the KEM assume the FO comparison was successful, thus the decryption of the ciphertext was executed without any faults. Statistical methods are then used to infer information about the secret key depending on whether a decapsulation was successful or not, under the assumption that the fault was successful.

### Objective of the invention

It is an object of the present invention to provide a security mechanism suitable to secure a Key Encapsulation Mechanism, KEM, against attacks like particularly Fault-Assisted Chosen Ciphertext Attacks, CCAs, which at the same time maintains reasonable operability of the processing entity.

### Summary of the invention

The object of the invention is achieved by processing entity with the following features, according to claim 1. Embodiments of the invention are presented in dependent claims.

In greater detail, the object of the invention is achieved by:
A first processing entity including memory and a processor unit, and comprising an implementation covering at least a Key Decapsulation Phase of a Key Encapsulation Mechanism, KEM, constructed to share a key to be shared between a second processing entity and said first processing entity, wherein the first processing entity, when executing the implementation of the Key Decapsulation Phase, executes a decapsulation method, the decapsulation method comprising:
- a receiving step, comprising to receive a ciphertext including the key to be shared in an encrypted form, which ciphertext was generated encrypting said key in a Key Encapsulation Phase complementary to said Key Decapsulation Phase;
- a decapsulation step, comprising to decrypt the encrypted key to achieve the key in plaintext;
- a transform step, comprising to re-encrypt the decrypted key to so as to achieve a transformed-ciphertext;
- a comparing step, comprising to compare the received ciphertext to the transformed-ciphertext;
- a decision step, comprising: (i) if the received ciphertext and the transformed-ciphertext don't match, to rate the result of the decapsulation step as a decapsulation error; (ii) if the received ciphertext and the transformed-ciphertext match, to rate the result of the decapsulation step as a successful decapsulation;
characterized in that the decapsulation method further comprises:
- a decapsulation count mechanism coupled to or integrated into the Key Decapsulation Phase of the KEM, comprising steps to: (i) detect and count and store in the processing entity decapsulation errors occurring when the Key Decapsulation Phase is executed, and (ii) when the count of decapsulation errors reaches or exceeds a predefined count limit, initiate an error measure.

The decapsulation count mechanism coupled to or integrated into the Key Decapsulation Phase of the KEM, which effects to detect and count and store in the processing entity decapsulation errors occurring when the Key Decapsulation Phase is executed, and initiate an error measure, when the count limit is reached or exceeded, has the effect that decapsulation errors do not immediately effect an error measure, but only limit the number of allowed repetitions of the KEM with decapsulation error. Hereby, a reasonable number of repetitions of the KEM can be rated acceptable, so as to let pass through decapsulation errors that occurred from harmless mistakes however not from attacks. On the other hand, the number of allowable repetitions of the KEM with decapsulation error is limited, herein impeding or possibly preventing statistical attacks like Fault-Assisted Chosen Ciphertext Attacks, which would require to execute the KEM with enforced decapsulation errors for a high repeated number of times and analyze the results of the executions by statistical measures.

Thus, the present invention provides a security mechanism suitable to secure a Key Encapsulation Mechanism, KEM, against attacks like particularly Fault-Assisted Chosen Ciphertext Attacks, Fault-Assisted CCAs, which at the same time maintains reasonable operability of the processing entity.

The count limit of decapsulation count mechanism is preferably balanced to a value that is sufficiently high to let pass through harmless decapsulation errors without an error measure, and at the same time sufficiently low to prevent statistical attacks based on enforced decapsulation errors.

According to some preferred embodiments, as long as the count of decapsulation errors doesn't reach or exceed the predefined count limit, and no further error measure is effected, the plaintext achieved in the decapsulation step is accepted as the key to be shared; on the other hand, when the count of decapsulation errors reaches or exceeds a predefined count limit, as an error measure, the plaintext or the key to be shared achieved in the decapsulation step is discarded or rejected.

According to some embodiments, the Key Encapsulation Mechanism, KEM, is based on asymmetric cryptography, wherein
- the decapsulation step applies a private key of a public/private key pair of the first processing entity to decrypt the encrypted key in the ciphertext to achieve the key in plaintext, and
- the transform step applies a public key corresponding to the private key and to the same public/private key pair of the first processing entity to re-encrypt the decrypted key from the ciphertext so as to achieve the transformed-ciphertext.

According to some embodiments, herein referred to as KEM with internal key generation, the first processing entity further comprises an implementation covering a Key Generation Phase of said Key Encapsulation Mechanism, KEM, which is constructed to generate the public/private key pair of the first processing entity including the private key and the public key. In other words, the first processing entity generates its KEM keys itself.

According to some embodiments, herein referred to as KEM with external key generation, the first processing entity further comprises an interface implementation constructed to receive the public/private key pair of the first processing entity from a further processing entity. Said further processing entity is external to the first processing entity, and comprises an implementation covering a Key Generation Phase of said Key Encapsulation Mechanism, KEM, which is constructed to generate the public/private key pair of the first processing entity including the private key and the public key. In other words, the first processing entity doesn't generate its KEM keys itself, or at least not all, however the KEM keys (or at least some) are externally generated and only implanted into the first processing entity.

According to some embodiments, further, implemented into the first processing entity, there is a fault detection counter constructed to detect and count fault attack events, wherein fault detection counter and the decapsulation count mechanism are ruled by a common counter security policy applying security policy rules.

According to some embodiments, the common counter security policy of the decapsulation count mechanism and the fault detection counter implies and/or applies one or both of the following security policy rules:
- a decapsulation error detected by the decapsulation count mechanism is counted only in the case that the fault detection counter detects a fault attack event essentially simultaneously, whereas a detected decapsulation error without an essentially simultaneous DFA attack event is not counted by the decapsulation count mechanism; or/and
- a DFA attack event detected by the fault attack event is counted only in the case that the decapsulation count mechanism detects a decapsulation error essentially simultaneously, whereas a detected fault attack event without an essentially simultaneous decapsulation error is not counted by the fault detection counter.

According to some embodiments, the common counter security policy of the decapsulation count mechanism and the fault detection counter implies and/or applies the following security policy rule:
- detected and counted decapsulation errors by the decapsulation count mechanism and detected and counted fault attack events by the fault detection counter are combined to a cumulative count of the decapsulation count mechanism and the fault detection counter, wherein the error measure is initiated only when the cumulative count reaches or exceeds said predefined count limit.

According to some embodiments, the error measure comprises one or several or a combination of several of the following measures:
- discard the decrypted key in plaintext achieved from decrypting the ciphertext;
- erase the key used for decryption in the decapsulation step, herein in case of a KEM based on asymmetric cryptography erase the private key;
- block or disable the first processing entity.

According to some embodiments, the Key Encapsulation Mechanism, KEM, is embedded into a lattice-based post-quantum cryptography scheme, particularly Kyber or NewHope or Saber.

### Brief description of the drawings

Embodiments of the invention will now be described with reference to the accompanying drawings, throughout which like parts are referred to by like references, and in which represents:

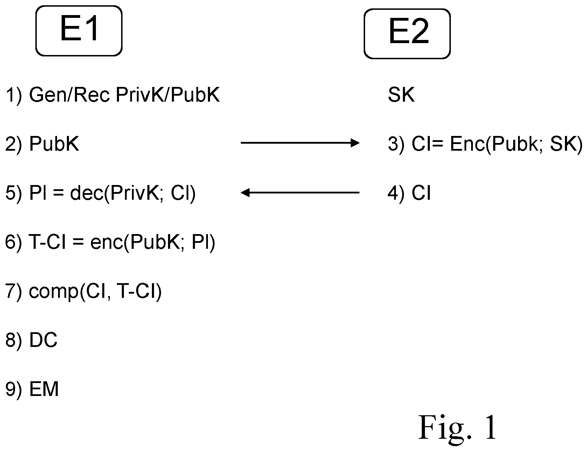

- Fig. 1: a first processing entity in communication with a second processing entity, according to an embodiment of the invention.

### Detailed description of the invention

Fig. 1 shows a first processing entity E1 in communication with a second processing entity E2, according to an embodiment of the invention. The first processing entity E1 desires to achieve from the second processing entity E2 via a Key Encapsulation Mechanism, KEM, a shared key SK of which the second processing entity E2 provides. 1) The first processing entity E1 generates a public/private key pair comprising a private key PrivK and a public key PubK, and 2) shares (sends) the public key PubK to the second processing entity E2. Instead of generating the public/private key pair itself, the first processing entity E1 may alternatively receive the public/private key pair from an external key generation entity, which generates the public/private key pair, and shares (sends) it to the first processing entity E1, with subsequent steps 2) remaining identical as described herein. The second processing entity E2 receives the shared public key PubK and 3) encrypts the to be shared key SK with the received public key PubK, so as to generate a ciphertext CI including the encrypted to be shared key SK. The ciphertext may include only the key SK or optionally include further data. The second processing entity E2 4) shares (sends) the ciphertext CI to the first processing entity E1. The first processing entity E1 receives and 5) decrypts the ciphertext CI with its own private key PrivK it generated (or received) in step 1), so as to achieve Plaintext PI which if no errors occurred is the key SK to be shared. The first processing entity E1 6) performs an FO transform step and herein re-encrypts the plaintext PI achieved in the previous step 5), to generate a transform-ciphertext T-Cl. The first processing entity E1 7) performs a comparing step and herein compares the ciphertext CI received from the second processing entity E2 to the self-generated transform-ciphertext T-CI of the transform step 6). In case the received ciphertext CI and the self-generated transform-ciphertext T-CI are identical, no decapsulation error occurred. A decapsulation count mechanism DC implemented in the first processing entity E1 8) detects and counts occurring decapsulation errors, if any. In case the count of the decapsulation count mechanism DC reaches or exceeds a predefined count limit, 9) an error measure is taken in the first processing entity E1.

### Cited documents

None.

## Claims

1. A first processing entity (E1) including memory and a processor unit, and comprising an implementation covering at least a Key Decapsulation Phase of a Key Encapsulation Mechanism, KEM, constructed to share a key (SK) to be shared between a second processing entity (E2) and said first processing entity (E1), wherein the first processing entity (E1), when executing the implementation of the Key Decapsulation Phase, executes a decapsulation method, the decapsulation method comprising:
- a receiving step, comprising to receive a ciphertext (CI) including the key (SK) to be shared in an encrypted form, which ciphertext (CI) was generated encrypting said key (SK) in a Key Encapsulation Phase complementary to said Key Decapsulation Phase;
- a decapsulation step (5), comprising to decrypt the encrypted key (SK) to achieve the key (SK) in plaintext (PI);
- a transform step (6), comprising to re-encrypt the decrypted key (SK) to so as to achieve a transformed-ciphertext (T-CI);
- a comparing step (7), comprising to compare the received ciphertext (CI) to the transformed-ciphertext (T-CI);
- a decision step, comprising: (i) if the received ciphertext and the transformed-ciphertext don't match, to rate the result of the decapsulation step as a decapsulation error; (ii) if the received ciphertext and the transformed-ciphertext match, to rate the result of the decapsulation step as a successful decapsulation;
**characterized in that** the decapsulation method further comprises:
- a decapsulation count mechanism (DC) coupled to or integrated into the Key Decapsulation Phase of the KEM, comprising steps to: (8) (i) detect and count and store in the processing entity decapsulation errors occurring when the Key Decapsulation Phase is executed, and (ii) when the count of decapsulation errors reaches or exceeds a predefined count limit, initiate an error measure.

2. The first processing entity (E1) according to claim 1, wherein,
- as long as in step (8) (i), the count of decapsulation errors doesn't reach or exceed the predefined count limit, and no further error measure is effected, the plaintext achieved in the decapsulation step is accepted as the key (SK) to be shared;
- in step (8) (ii,) when the count of decapsulation errors reaches or exceeds a predefined count limit, as an error measure, the plaintext or the key (SK) to be shared achieved in the decapsulation step is discarded or rejected.

3. The first processing entity (E1) according to claim 1 or 2, wherein the Key Encapsulation Mechanism, KEM, is based on asymmetric cryptography, wherein
- the decapsulation step (5) applies a private key (PrivK) of a public/private key pair of the first processing entity (E1) to decrypt the encrypted key (SK) in the ciphertext (CI) to achieve the key (SK) in plaintext (PI), and
- the transform step (6) applies a public key (PubK) corresponding to the private key (PrivK) and to the same public/private key pair of the first processing entity (E1) to re-encrypt the decrypted key (SK) from the ciphertext (CI) so as to achieve the transformed-ciphertext (T-CI).

4. The first processing entity (E1) according to claim 3, wherein the first processing entity (E1) further comprises:
- an implementation covering a Key Generation Phase (1) of said Key Encapsulation Mechanism, KEM, which is constructed to generate the public/private key pair of the first processing entity (E1) including the private key (PrivK) and the public key (PubK); or
- an interface implementation constructed to receive the public/private key pair of the first processing entity (E1) from a further processing entity, which is external to the first processing entity (E1), and which comprises an implementation covering a Key Generation Phase of said Key Encapsulation Mechanism, KEM, which is constructed to generate the public/private key pair of the first processing entity (E1) including the private key (PrivK) and the public key (PubK).

5. The first processing entity (E1) according to any of claims 1 to 4, wherein further, implemented into the first processing entity (E1), there is a fault detection counter constructed to detect and count fault attack events, wherein fault detection counter and the decapsulation count mechanism (DC) are ruled by a common counter security policy applying security policy rules.

6. The first processing entity (E1) according to claim 5, wherein the common counter security policy of the decapsulation count mechanism (DC) and the fault detection counter implies one or both of the following security policy rules:
- a decapsulation error detected by the decapsulation count mechanism (DC) is counted only in the case that the fault detection counter detects a fault attack event essentially simultaneously, whereas a detected decapsulation error without an essentially simultaneous DFA attack event is not counted by the decapsulation count mechanism (DC); or/and
- a DFA attack event detected by the fault attack event is counted only in the case that the decapsulation count mechanism (DC) detects a decapsulation error essentially simultaneously, whereas a detected fault attack event without an essentially simultaneous decapsulation error is not counted by the fault detection counter.

7. The first processing entity (E1) according to claim 5 or 6, wherein the common counter security policy of the decapsulation count mechanism (DC) and the fault detection counter implies the following security policy rule:
- detected and counted decapsulation errors by the decapsulation count mechanism (DC) and detected and counted fault attack events by the fault detection counter are combined to a cumulative count of the decapsulation count mechanism (DC) and the fault detection counter, wherein the error measure is initiated only when the cumulative count reaches or exceeds said predefined count limit.

8. The first processing entity (E1) according to any of claims 1 to 7, wherein the error measure comprises one or several or a combination of several of the following measures:
- discard the decrypted key (SK) in plaintext (PI) achieved from decrypting the ciphertext (CI);
- erase the key used for decryption in the decapsulation step, herein in case of a KEM based on asymmetric cryptography erase the private key (PrivK);
- block or disable the first processing entity (E1).

9. The first processing entity (E1) according to any of claims 1 to 8, wherein the Key Encapsulation Mechanism, KEM, is embedded into a lattice-based post-quantum cryptography scheme, particularly Kyber or NewHope or Saber.
